(19) Europäisches Patentamt
European Patent Office
Office européen des brevets

(11) Veröffentlichungsnummer: **0 093 346**
**A1**

(12) **EUROPÄISCHE PATENTANMELDUNG**

(21) Anmeldenummer: 83103945.8

(22) Anmeldetag: 22.04.83

(51) Int. Cl.³: C 09 B 29/01
C 09 B 43/42
//C09B29/085, C09B43/00,
C09B67/38, D06P1/18

(30) Priorität: 28.04.82 DE 3215788

(43) Veröffentlichungstag der Anmeldung:
09.11.83 Patentblatt 83/45

(84) Benannte Vertragsstaaten:
CH DE FR GB IT LI

(71) Anmelder: HOECHST AKTIENGESELLSCHAFT
Postfach 80 03 20
D-6230 Frankfurt am Main 80(DE)

(72) Erfinder: Schickfluss, Rudolf, Dr.
Luisenstrasse 37
D-6233 Kelkheim (Taunus)(DE)

(72) Erfinder: Hähnle, Reinhard, Dr.
Kastanienweg 7a
D-6240 Königstein (Taunus)(DE)

(54) **Wasserunlösliche Monoazofarbstoffe, Verfahren zu ihrer Herstellung und ihre Verwendung.**

(57) Monoazofarbstoffe der allgemeinen Formel (1)

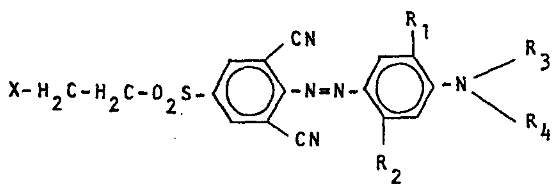

(1)

in welcher X eine Alkoxy $_{C_1-C_{12}}$, β-Methoxy-äthoxy-, Alkylthio $_{C_1-C_{12}}$, β-Hydroxyäthylthio-, Monoalkyl $_{C_1-C_{12}}$ amino-, δ-Methoxypropylamino-, Di(alkyl $_{C_1-C_{12}}$) amino-, Aryloxy-, Arylthio-, Alkyl $_{C_1-C_2}$ arylthio-, Chlorarylthio- oder Monoarylaminogruppe bedeutet, $R_1$ ein Wasserstoff- oder Chloratom oder eine Alkyl $_{C_1-C_4}$, Alkoxy $_{C_1-C_4}$ oder β-Methoxyäthoxygruppe darstellt, $R_2$ ein Wasserstoffatom oder eine Methyl-, Methoxy-, Äthoxy-, Alkyl $_{C_1-C_6}$ C – NH–, Benzoylamino- oder
‖
O

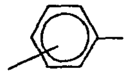
C–NH–Gruppe bedeutet,
‖
O

Alkyl$_{C_1-C_2}$

$R_3$ und $R_4$ unabhängig voneinander eine Alkyl $_{C1-C4}$, β-Hydroxyäthyl-, β-Hydroxypropyl-, β-Cyanäthyl-, β-Methoxycarbonyl-äthyl-, β-Äthoxycarbonyläthyl-, β-Acetoxäthyl-, Benzyl, β-Phenäthyl-, Allyl- oder Methallylgruppe darstellt und $R_4$ zusätzlich für ein Wasserstoffatom stehen kann, Verfahren zu ihrer Herstellung indem man Verbindungen der Formel (1), die anstelle der beiden Cyangruppen ein Halogenatom enthalten, in bekannter Weise mit Cu(I)-Cyanid in inertem organischem Lösungsmittel umsetzt, sowie Verwendung der Farbstoffe zum Färben oder Bedrucken von hydrophoben, synthetischen Fasermaterialien.

EP 0 093 346 A1

Croydon Printing Company Ltd.

HOECHST AKTIENGESELLSCHAFT HOE 82/F 085 Dr.Mü/cr 0093346

# Wasserunlösliche Monoazofarbstoffe, Verfahren zu ihrer Herstellung und ihre Verwendung

Die vorliegende Erfindung betrifft neue, wasserunlösliche Monoazofarbstoffe der allgemeinen Formel (1)

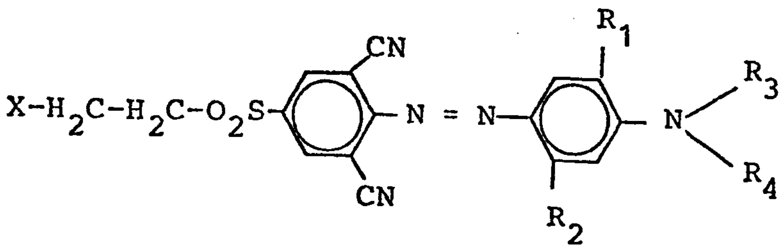

(1)

in welcher X eine Alkoxy$_{C_1-C_{12}}$, ß-Methoxy-äthoxy-, Alkylthio$_{C_1-C_{12}}$, ß-Hydroxyäthylthio-, Monoalkyl$_{C_1-C_{12}}$amino-, γ-Methoxypropylamino-, Di(alkyl$_{C_1-C_{12}}$)amino-, Aryloxy-, beispielsweise Phenoxy-, Arylthio-, beispielsweise Phenylthio-, Alkyl$_{C_1-C_2}$ arylthio-, beispielsweise Methylphenylthio-, Chlorarylthio-, beispielsweise Chlorphenylthio-, oder Monoarylamino-, beispielsweise Monophenylaminogruppe bedeutet,

$R_1$ ein Wasserstoff- oder Chloratom oder eine Alkyl$_{C_1-C_4}$, Alkoxy$_{C_1-C_4}$ oder ß-Methoxyäthoxygruppe darstellt,

$R_2$ ein Wasserstoffatom oder eine Methyl-, Methoxy-, Äthoxy-, Alkyl$_{C_1-C_5}$ C(=O)-NH-, Benzoylamino- oder

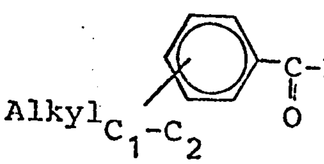

-NH-Gruppe bedeutet,

$R_3$ und $R_4$ unabhängig voneinander eine Alkyl$_{C_1-C_4}$, ß-Hydroxyäthyl-, ß-Hydroxypropyl-, ß-Cyanäthyl-, ß-Methoxycarbonyl-äthyl-, ß-Äthoxycarbonyläthyl-, ß-Acetoxäthyl-, Benzyl-, ß-Phenäthyl-, Allyl- oder Methallylgruppe darstellt und $R_4$ zusätzlich für ein Wasserstoffatom stehen kann, ein Verfahren zu ihrer Herstellung sowie deren Verwendung zum Färben oder Bedrucken von hydrophoben, synthetischen, organischen Fasermaterialien.

Die Farbstoffe der genannten Formel (1) können hergestellt werden, indem man Monoazofarbstoffe der allgemeinen Formel (2)

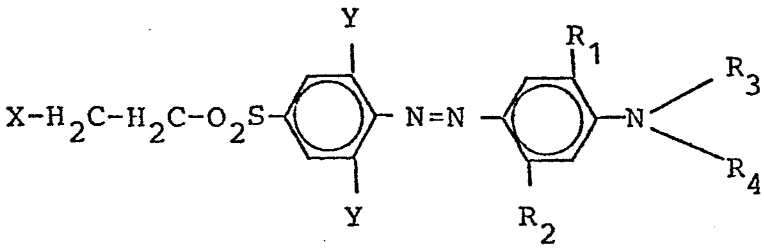

(2),

in welcher Y ein Halogenatom, vorzugsweise Chlor- oder Bromatom darstellt und X, $R_1$, $R_2$, $R_3$ und $R_4$ die vorstehend genannten Bedeutungen haben, in an sich bekannter Weise mit Kupfer(I)-cyanid oder mit einer Mischung aus Verbindungen, in welcher sich Kupfer(I)-cyanid bilden kann, umsetzt, wobei die beiden Halogenatome durch Cyanidgruppen ersetzt werden /¯DE-OS 1 544 563, 1 809 920, 1 809 921, 2 341 109 und 2 759 103_7. Als Mischungen der genannten Art sind beispielsweise Mischungen aus Natriumcyanid und Kupfer (I)-Verbindungen, wie CuCl, CuBr oder CuJ geeignet. Bekannt ist auch die Verwendung einer Mischung aus CuCN und $Zn(CN)_2$ /¯DE-OS 2 456 495_7. Die Austauschreaktion wird in einem inerten organischen Lösungsmittel, vorzugsweise in einem dipolaren aprotischen Lösungsmittel, beispielsweise in N-Methylpyrrolidon, Pyridin, Dimethylformamid oder Dimethylsulfoxyd vorgenommen, wobei die Reaktionstemperaturen üblicherweise zwischen 20 und 150°C liegen.

Die zur Herstellung der erfindungsgemäßen Farbstoffe erforderlichen Farbstoffe der genannten Formel (2) können hergestellt werden, indem man eine Diazoniumverbindung eines aromatischen Amins der allgemeinen Formel (3)

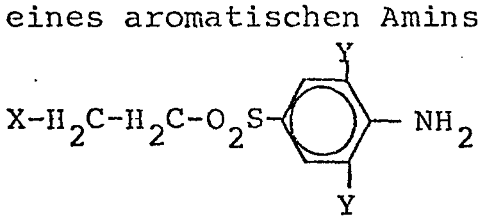

(3),

in welcher X und Y die weiter oben genannten Bedeutungen haben, mit einer Kupplungskomponente der Formel (4)

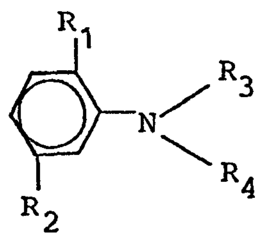

(4)

in welcher $R_1$, $R_2$, $R_3$ und $R_4$ die weiter oben genannten Bedeutungen haben, kuppelt.

Aus den Aminen der allgemeinen Formel (3) werden die Diazoniumverbindungen in an sich bekannter Weise durch Einwirkung von salpetriger Säure in einem wäßrigen Medium oder einer anorganischen oder organischen Säure, insbesondere durch Einwirkung von Nitrosylschwefelsäure, bei Temperaturen von 0 bis 10°C erhalten. Die Kupplung erfolgt ebenfalls in an sich bekannter Weise durch Vereinigung der erhaltenen Diazolösung mit einer Lösung der Kupplungskomponente der genannten allgemeinen Formel (4) bei Temperaturen von 0 bis 30°C, vorzugsweise 0 bis 10°C, in einem geeigneten Lösungsmittel, vorzugsweise in mit Schwefelsäure angesäuertem Wasser. Der Zusatz von mit Wasser mischbaren Alkoholen ist manchmal angebracht. In manchen Fällen kann es zweckmäßig sein, während der Kupplung den pH-Wert abzupuffern, beispielsweise durch Zugabe von Natriumacetat. Die Kupplung ist nach einigen Stunden beendet und der Farbstoff der genannten Formel (2) kann wie üblich isoliert und getrocknet werden.

Die benötigten Kupplungskomponenten der genannten Formel (4) lassen sich nach bekannten Verfahren herstellen.

Es ist auch möglich, die erfindungsgemäßen Azofarbstoffe der Formel (1) auch dadurch herzustellen, daß man an Farbstoffe der Formel (5),

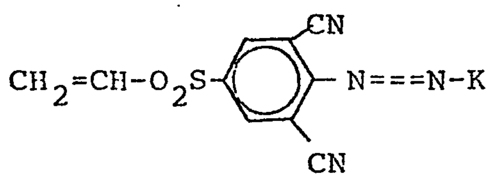 (5)

die nach weiter oben beschriebenen Verfahren hergestellt werden können, Alkohole von 1 bis 12 Kohlenstoffatomen, Phenole, die kernsubstituiert sein können, Alkylmercaptane von 1 bis 12 C-Atomen, Thiophenole, Monoalkyl- oder Dialkylamine, bei denen die Alkylgruppen aus 1 bis 12 C-Atomen bestehen, in an sich bekannter Weise anlagert (HOUBEN-WEYL, Handbuch der Organischen Chemie, Band 6, Teil 3, Seite 23 und Band 11, Teil 1, Seite 291).

Die erfindungsgemäßen Monoazofarbstoffe sind einzeln oder im Gemisch untereinander oder auch im Gemisch mit anderen Dispersionsfarbstoffen vorzüglich zum Färben und Bedrucken von hydrophoben synthetischen Fasermaterialien geeignet.

Als hydrophobe, synthetische, organische Fasermaterialien kommen beispielsweise solche aus Celluloseestern, Polyestern, Polyurethanen, Polyolefinen oder Polyamiden in Betracht.

Bevorzugt gefärbt oder bedruckt werden von den genannten Fasermaterialien solche aus Celluloseestern, wie Cellulose-di-, -2 1/2- oder -triacetat, Polyamiden, wie Polycaprolactam oder Polyhexamethylendiaminoadipat, insbesondere jedoch solche aus Polyestern, wie Polyäthylenglykolterephthalat. Auch Mischungen der genannten Fasermaterialien untereinander oder mit natürlichen

hydroxylgruppenhaltigen oder stickstoffhaltigen Fasermaterialien, wie Cellulosefasern oder Wolle, können zum Färben oder Bedrucken mit den neuen Farbstoffen eingesetzt werden. Die Fasermaterialien können hierbei in den verschiedensten Verarbeitungsstadien vorliegen, beispielsweise als Faden, Flocke, Kammzug oder als Stückware, wie Gewebe, Gewirke oder Vlies, oder als konfektionierte Ware.

Bei der erfindungsgemäßen Anwendung der Monoazofarbstoffe zum Färben oder Bedrucken der genannten Fasermaterialien werden die Farbstoffe, vorzugsweise in zubereiteter Form eingesetzt, wie beispielsweise in wäßriger Dispersion oder in Lösung in organischen Lösungsmitteln oder in Emulsion oder Dispersion, die neben einem Lösungsmittel oder Lösungsmittelgemisch noch Wasser enthalten können.

Zur Herstellung von Dispersionen werden die Farbstoffe in Gegenwart von Dispergiermitteln und gegebenenfalls weiteren Mahlhilfsmitteln feinzerteilt. Anschließend eignen sich insbesondere wäßrige Dispersionen zur Herstellung trockener Farbstoffpräparate, die dann neben dem betreffenden Farbstoff die eingesetzten Dispergiermittel und gegebenenfalls eingesetzten Mahlhilfsmittel enthalten. Ein wesentliches Kennzeichen solcher Farbstoffpräparate ist, daß sie beim Eintragen in Wasser ohne Einsatz besonderer Feinverteilungsvorrichtungen wieder eine Farbstoffdispersion mit einem Feinverteilungsgrad, wie er vor der Trocknung vorgelegen hat, ergeben. Die Trocknung wäßriger Dispersionen kann in verschiedenartiger Weise erfolgen, wie durch Verdunstung an der Raumluft in Normaldruck- oder Vakuumtrocknungsanlagen oder durch Sprühtrocknung in dafür geeigneten Anlagen.

Man färbt nach an sich bekannten Verfahren, wobei sich die Färbebedingungen weitgehend nach der Art der synthetischen Fasermaterialien und deren Verarbeitungszustand richten. Polyesterfasern beispielsweise färbt man

vorzugsweise aus wäßriger Dispersion bei Temperaturen über 100°C unter Druck. Die Färbungen können aber auch beim Siedepunkt des Wassers in Gegenwart von Farbüberträgern, wie beispielsweise Phenyl-phenolen, Polychlorbenzolverbindungen, Methylnaphthalin oder ähnlichen Hilfsmitteln, durchgeführt werden. Ferner erhält man kräftige Färbungen, wenn mann Gewebe oder Gewirke aus Polyesterfasern mit Suspensionen eines der Azofarbstoffe oder einem Gemisch dieser Farbstoffe imprägniert und sie dann einer kurzzeitigen Hitzeeinwirkung, beispielsweise bei Temperaturen von 180 bis 210°C, unterwirft.

Fasermaterial aus Cellulose-2 1/2-acetat färbt man vorzugsweise bei Temperaturen von 65 bis 85°C und solches aus Cellulosetriacetat bei Temperaturen bis etwa 115°C. Nahe Kochtemperatur im Bereich zwischen 90 und 95°C werden Fasermaterialien aus Polyamiden gefärbt. Beim Färben von Cellulose-2 1/2-acetat- oder Polyamidfasern ist der Einsatz von Farbüberträgern nicht erforderlich.

Der günstigste pH-Bereich für die Färbebäder, aus denen die genannten Substrate gefärbt werden, liegt zwischen 2 und 9, insbesondere zwischen 4 und 8.

Für die Einstellung des gewünschten pH-Wertes bedient man sich beispielsweise wäßriger Lösungen von Ammoniumsulfat, Natrium- oder Ammonium-o-phosphat, Natriumacetat, Schwefelsäure oder Essigsäure.

Das gefärbte Material wird zur Verbesserung der Reibechtheit zweckmäßig von oberflächlich anhaftendem Farbstoff befreit, beispielsweise durch sorgfältiges Spülen, insbesondere aber durch übliche Nachbehandlungsverfahren, wie Emulgatorwäsche oder reduktive Nachbehandlung.

Die erfindungsgemäßen Farbstoffe eignen sich auch zum Färben der vorstehend aufgeführten hydrophoben Materialien aus organischen Lösungsmitteln nach den bekannten Methoden.

Die Herstellung von Drucken auf den genannten Fasermaterialien bei der erfindungsgemäßen Anwendung der Monoazofarbstoffe der Formeln (1) bzw. (2) erfolgt ebenfalls nach an sich bekannten Verfahren. Auf Polyesterfasermaterial beispielsweise können die Farbstoffe in wasserhaltigen Zubereitungen angewandt werden, die neben dem feinverteilten Farbstoff geeignete Verdickungsmittel und Fixierbeschleuniger enthalten.

Die Fixierung erfolgt beispielsweise nach dem Drucken und Trocknen durch Dämpfen bei Atmosphärendruck während 30 bis 60 Minuten oder unter erhöhtem Druck bis zu 2 atü während 20 bis 30 Minuten. Ebenso kann die Fixierung durch Einwirkung von Heißdampf oder Heißluft von 150 bis 220°C während 30 bis 90 Sekunden bewirkt werden.

Beispiel 1

17,4 g (0,05 Mol) 2,6-Dibrom-4-vinylsulfonyl-anilin werden in 200 ml Eisessig gelöst, danach wird bei ca. 5°C mit 16 g 40%iger Nitrosylschwefelsäure langsam versetzt. Zur Vervollständigung der Diazotierung wird 2 Stunden bei 5 - 10°C nachgerührt.

8,7 g N-Äthyl-N-ß-cyanäthylanilin werden in 100 ml Wasser und 10 ml verdünnter Schwefelsäure angerührt. Unter Zugabe von Eis wird die wie vorstehend beschrieben hergestellte Diazolösung innerhalb von 20 Minuten zugetropft. Zur Vervollständigung der Kupplung wird 2 Stunden bei Raumtemperatur und bei einem pH-Wert von 3, der durch Zugabe von Natronlauge eingestellt wird, nachgerührt. Der anfallende Farbstoff wird abgesaugt, dann neutral und salzfrei gewaschen. Man erhält ca. 25 g eines dunklen Pulvers des Farbstoffs der Formel

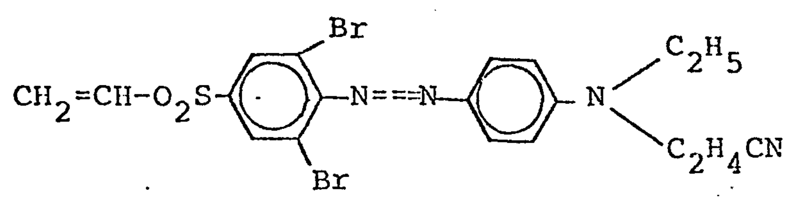

25 g dieses Farbstoffs werden in 100 g n-Hexanol und 3g Natronlauge (33 Gew.-%ig) 1 Stunde bei 50°C gerührt. Danach wird das Reaktionsgemisch auf 1000 g Wasser gegeben und überschüssiges n-Hexanol durch Wasserdampfdestillation abgetrennt. Der Farbstoff der Formel

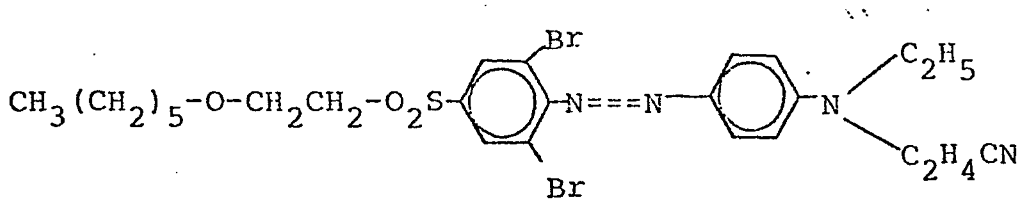

fällt hierbei als Öl an. Er kann jedoch durch Lösen in Aceton und Ausfällen mit Wasser kristallin erhalten werden. Gewonnen werden etwa 27,5 g.
23 g des so erhaltenen Farbstoffs (0,366 Mol) werden unter Zusatz von 6,5 g Kupfer(I)-cyanid und 0,73 g Natriumcyanid in 60 ml Dimethylsulfoxid 30 Minuten bei 90 - 95°C gerührt. Anschließend wird die Reaktionsmischung auf 1 l Wasser, das 20 g Natriumcyanid enthält, gegeben und 1 Stunde nachgerührt. Anschließend wird abgesaugt und der abfiltrierte Farbstoff neutral gewaschen. Gewonnen werden 19 g (0,365 Mol) an getrocknetem Farbstoff, welcher der Formel

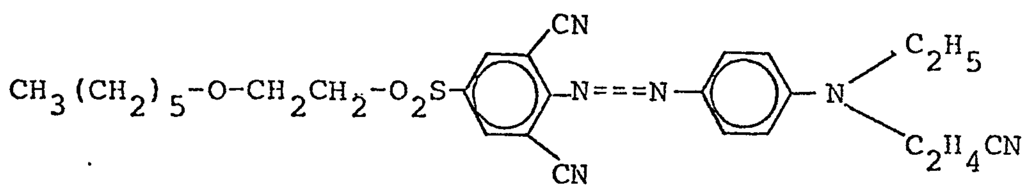

entspricht. Der Schmelzpunkt beträgt 55-57°C.

Mit dem letztgenannten Farbstoff erhält man auf Polyestergewebe eine blaustichig rote Färbung von hervorragender Sublimationsechtheit und guter Lichtechtheit.

Weitere Farbstoffe der eingangs genannten allgemeinen Formel (1), die in der folgenden Tabelle aufgeführt sind, können nach dem erfindungsgemäßen Verfahren hergestellt werden.

| Nr. | X | K | Farbton auf Polyesterfasern |
|---|---|---|---|
| 2 | $(C_2H_5)_2N-$ | 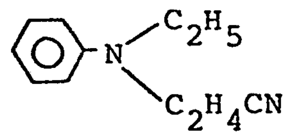 | rot |
| 3 | 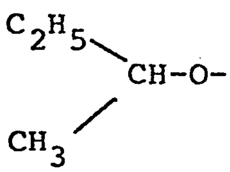 | 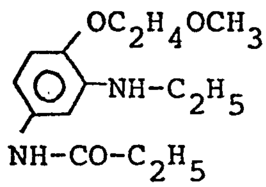 | blau |
| 4 | $(C_2H_5)_2N-$ | 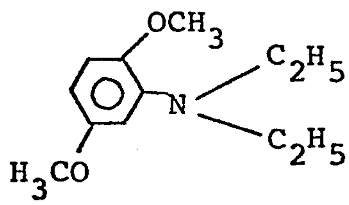 | blau |
| 5 | $C_2H_5-NH-$ | " | blau |
| 6 | 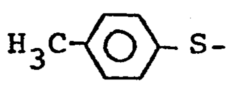 | 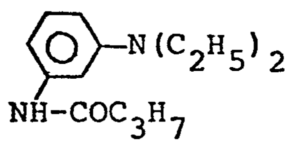 | violett |
| 7 | 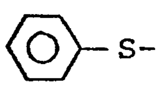 | " | violett |
| 8 | $CH_3O(CH_2)_3-NH-$ | " | violett |
| 9 | $CH_3O-$ | 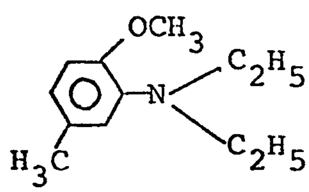 | rotstichig blau |
| 10 | $C_2H_5O-$ | 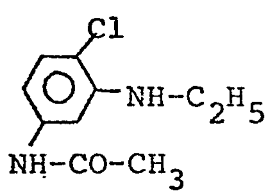 | rot |

| Nr. | X | K | Farbton auf Polyesterfasern |
|---|---|---|---|
| 11 | $C_2H_5-S-$ | 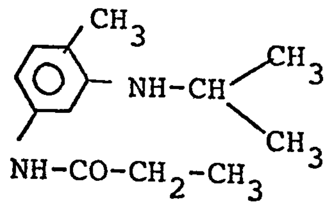 | violett |
| 12 | $CH_3O-CH_2CH_2O-$ | 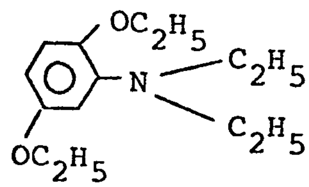 | rotstichig blau |
| 13 | 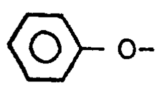 | 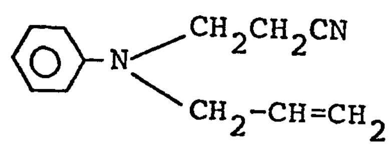 | rot |
| 14 | 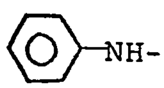 | 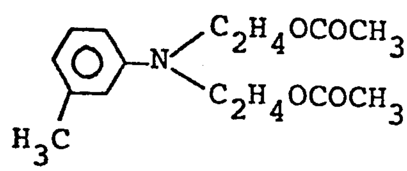 | rot |
| 15 | $CH_3(CH_2)_4O-$ | 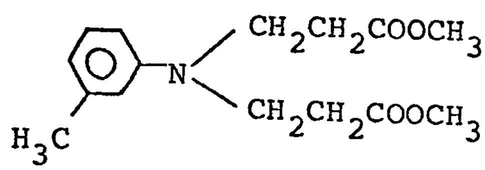 | rot |

Beispiel 16

17,4 g (0,05 Mol) 2,6-Dibrom-4-vinylsulfonylanilin werden in 70 g n-Butanol unter Zusatz von 1,5 g Natronlauge (33 %ig) 1 Stunde bei 50°C gerührt. Danach wird das überschüssige n-Butanol weitgehend abgezogen. Der Rückstand besteht aus 20 g des 4-ß-n-Butoxy-äthylsulfonyl-2,6-dibrom-anilins, das in 200 ml Eisessig gelöst wird. Anschließend wird bei ca. 5°C mit 16 g 40%iger Nitrosylschwefelsäure versetzt. Zur Vervollständigung der Diazotierung wird 2 Stunden bei 5-10°C nachgerührt.

13,4 g (0,05 Mol) 3-Diäthylamino-benzanilid werden in 100 ml Wasser und 10 ml verdünnter Schwefelsäure angerührt und suspendiert. Unter Zugabe von Eis wird die wie vorstehend beschrieben hergestellte Diazolösung innerhalb von 20 Minuten zugetropft. Zur Vervollständigung der Kupplung wird 2 Stunden bei Raumtemperatur und bei einem pH-Wert von 2,5, der durch Zugabe von verdünnter Natronlauge eingestellt wird, nachgerührt. Der anfallende Farbstoff wird abgesaugt, neutral und salzfrei gewaschen und schließlich getrocknet. Man erhält 31 g eines dunkelbraunen Pulvers des Farbstoffs der Formel

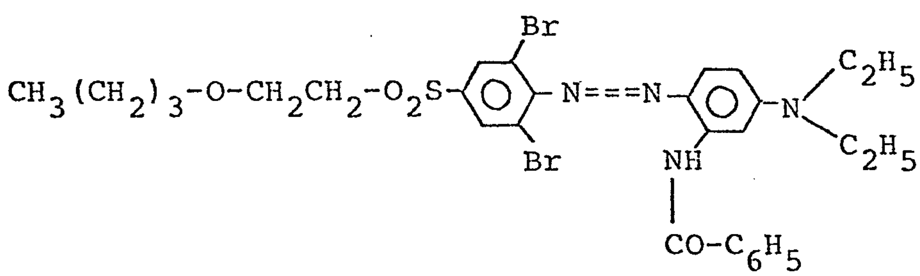

30 g dieses Farbstoffs (0,43 Mol) werden unter Zusatz von 7,7 g Kupfer(I)-cyanid und 0,86 g Natriumcyanid in 65 ml Dimethylsulfoxid 30 Minuten bei 95°C gerührt. Anschließend wird die Reaktionsmischung auf 1 l Wasser, das 20 g Natriumcyanid enthält, gegeben und 1 Stunde

nachgerührt, dann abgesaugt und der angefallene Niederschlag neutral gewaschen. Gewonnen werden an getrocknetem Farbstoff der Formel

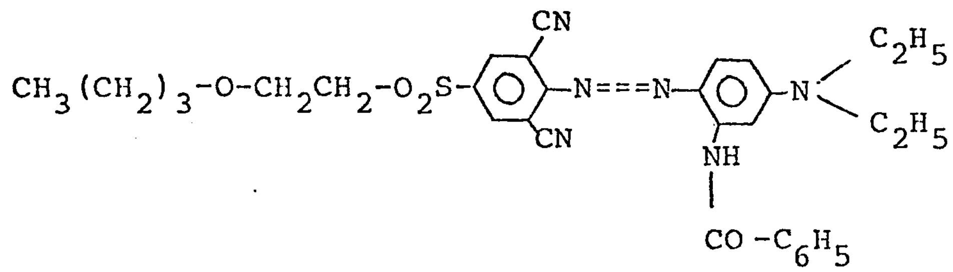

23,5 g. Man erhält mit diesem Farbstoff auf Polyestergewebe eine blaustichig violette Färbung von sehr guter Sublimationsechtheit und guter Lichtechtheit.

Weitere Farbstoffe der eingangs genannten allgemeinen Formel (1), die in der folgenden Tabelle aufgeführt sind, können nach dem erfindungsgemäßen Verfahren hergestellt werden.

| Nr. | X | K | Farbton auf Polyesterfasern |
|---|---|---|---|
| 17 | $CH_3(CH_2)_3$-O- | 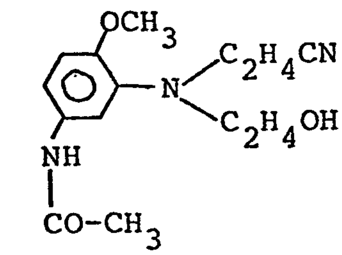 | blau |
| 18 | $CH_3(CH_2)_3$-O- | 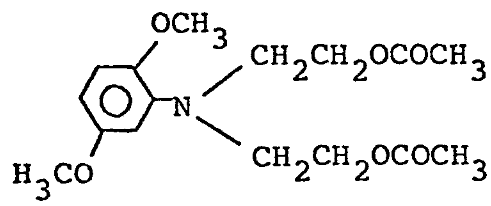 | rotstichig blau |
| 19 | $CH_3(CH_2)_3$-O- | 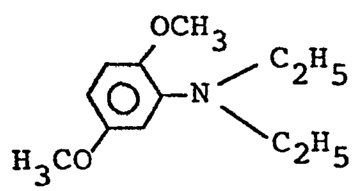 | blau |
| 20 | $CH_3(CH_2)_5$O- | 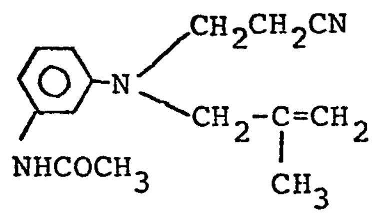 | blaustichig rot |
| 21 | $CH_3(CH_2)_5$O- | 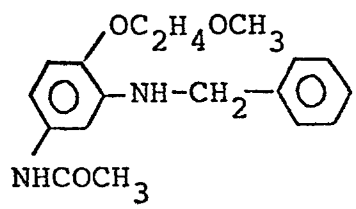 | blau |
| 22 | HO-$CH_2CH_2$-S- | 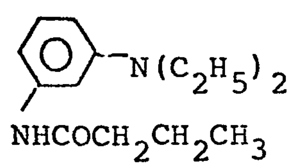 | violett |

| Nr. | X | K | Farbton auf Polyesterfasern |
|---|---|---|---|
| 23 | $CH_3OCH_2CH_2O-$ | 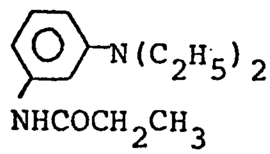 | violett |
| 24 | $CH_3OCH_2CH_2O-$ | 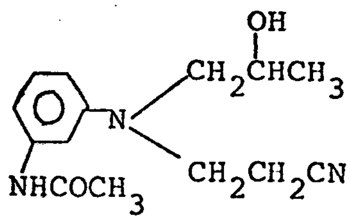 | blaustichig rot |
| 25 | $CH_3(CH_2)_3O-$ | 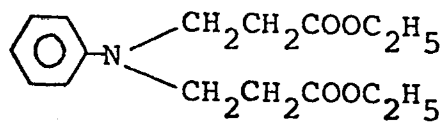 | rot |
| 26 | $CH_3(CH_2)_3O-$ | 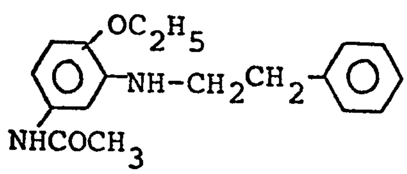 | blau |

PATENTANSPRÜCHE

1. Monoazofarbstoffe der allgemeinen Formel (1)

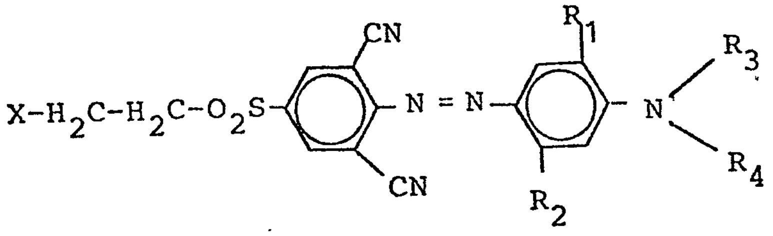 (1)

in welcher X eine Alkoxy$_{C_1-C_{12}}$, ß-Methoxy-äthoxy-, Alkylthio$_{C_1-C_{12}}$, ß-Hydroxyäthylthio-, Monoalkyl$_{C_1-C_{12}}$amino-, γ-Methoxypropylamino-, Di(alkyl$_{C_1-C_{12}}$)amino-, Aryloxy-, Arylthio-, Alkyl$_{C_1-C_2}$arylthio-, Chlorarylthio- oder Monoarylaminogruppe bedeutet,

$R_1$ ein Wasserstoff- oder Chloratom oder eine Alkyl$_{C_1-C_4}$, Alkoxy$_{C_1-C_4}$ oder ß-Methoxyäthoxygruppe darstellt,

$R_2$ ein Wasserstoffatom oder eine Methyl-, Methoxy-, Äthoxy-, Alkyl$_{C_1-C_5}$ $\underset{\underset{O}{\|}}{C}$ - NH-, Benzoylamino- oder

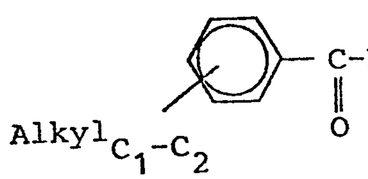 -NH-Gruppe bedeutet,

$R_3$ und $R_4$ unabhängig voneinander eine Alkyl$_{C_1-C_4}$, ß-Hydroxyäthyl-, ß-Hydroxypropyl-, ß-Cyanäthyl-, ß-Methoxycarbonyl-äthyl-, ß-Äthoxycarbonyläthyl-, ß-Acetoxäthyl-, Benzyl-, ß-Phenäthyl-, Allyl- oder Methallylgruppe darstellt und $R_4$ zusätzlich für ein Wasserstoffatom stehen kann.

2. Monoazofarbstoff der Formel

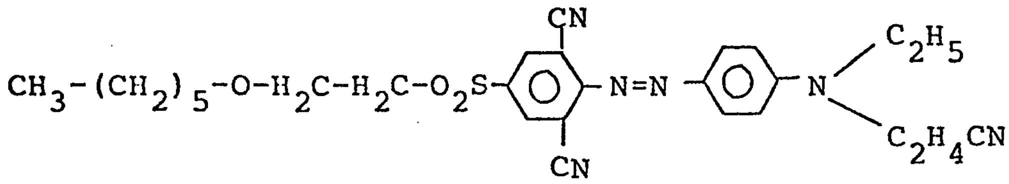

3. Monoazofarbstoff der Formel

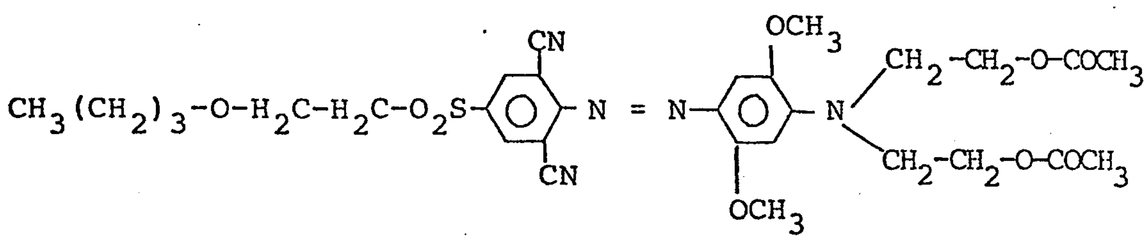

4. Monoazofarbstoff der Formel

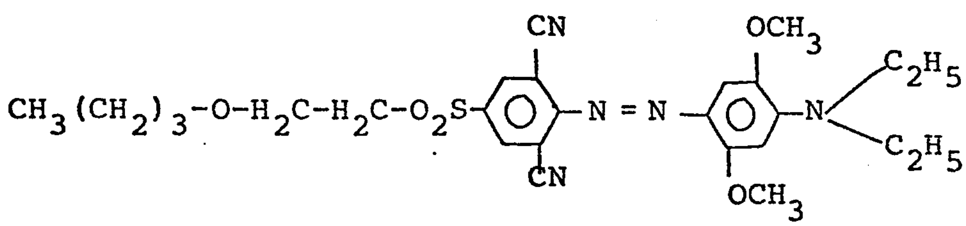

5. Monoazofarbstoff der Formel

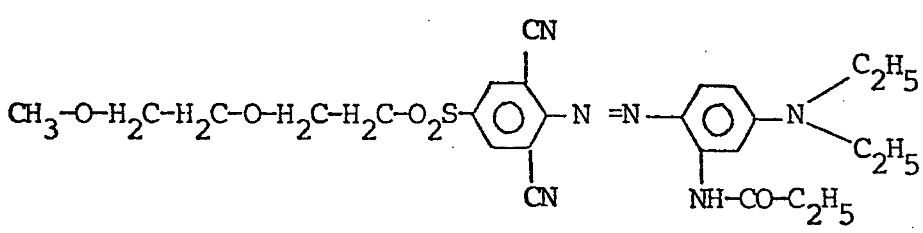

6. Farbstoffzubereitungen bestehend aus einem feinverteilten wasserunlöslichen Azofarbstoff sowie üblichen Dispergier- und Konservierungsmitteln und Wasser oder einem organischen Lösungsmittel, dadurch gekennzeichnet, daß sie als wasserunlöslichen Azofarbstoffe einen Farbstoff der in Anspruch 1 genannten allgemeinen Formel (1) enthalten.

7. Verfahren zur Herstellung von wasserunlöslichen Azofarbstoffen der in Anspruch 1 genannten allgemeinen Formel (1), dadurch gekennzeichnet, daß man einen Monoazofarbstoff der allgemeinen Formel (2)

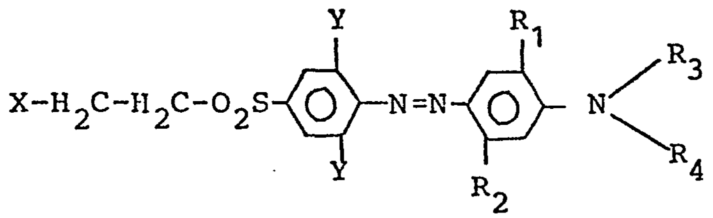

(2),

in welcher Y ein Halogenatom, vorzugsweise ein Chlor- oder Bromatom darstellte und X, $R_1$, $R_2$, $R_3$ und $R_4$ die in Anspruch 1 genannten Bedeutungen haben, in an sich bekannter Weise mit Kupfer(I)-cyanid oder mit einer Mischung aus Verbindungen, in welcher sich Kupfer(I)-cyanid bilden kann, in einem inerten organischen Lösungsmittel umsetzt.

8. Verwendung der in Anspruch 1 beschriebenen wasserunlöslichen Monoazofarbstoffe zum Färben oder Bedrucken von hydrophoben, synthetischen, organischen Fasermaterialien.

0093346

Europäisches Patentamt

# EUROPÄISCHER RECHERCHENBERICHT

Nummer der Anmeldung

EP 83 10 3945

| EINSCHLÄGIGE DOKUMENTE | | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
| Y | DE-A-1 794 402 (BAYER) * Seiten 1,2, Formeln I,II; Seiten 17,18, Beispiele 15,16 * | 1,6-8 | C 09 B 29/01<br>C 09 B 43/42 //<br>C 09 B 29/085<br>C 09 B 43/00<br>C 09 B 67/38<br>D 06 P 1/18 |
| Y | FR-A-2 227 382 (HOECHST) * Seiten 1,2, Formeln I,II * | 1,7,8 | |
| A | FR-A-2 316 289 (SANDOZ) * Seiten 1,2, Formel I * | 1,7,8 | |
| A | CH-A- 512 564 (SANDOZ) * Spalten 1,2, Formel; Spalten 5,6, Beispiel 24 * | 1,7,8 | |
| | | | RECHERCHIERTE SACHGEBIETE (Int. Cl. 3) |
| | | | C 09 B 29/00<br>C 09 B 43/00 |

Der vorliegende Recherchenbericht wurde für alle Patentansprüche erstellt.

| Recherchenort | Abschlußdatum der Recherche | Prüfer |
|---|---|---|
| DEN HAAG | 09-08-1983 | GREEN C.H. |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82